Europäisches Patentamt

European Patent Office

Office européen des brevets

(19)

(11) **EP 0 829 796 B1**

(12) **FASCICULE DE BREVET EUROPEEN**

(45) Date de publication et mention
de la délivrance du brevet:
**07.11.2001 Bulletin 2001/45**

(51) Int Cl.[7]: **G05F 3/26**

(21) Numéro de dépôt: **97202579.5**

(22) Date de dépôt: **21.08.1997**

(54) **Contrôleur de tension à sensibilité aux variations de température atténuée**

Spannungssteuerung mit gedämpfter Temperaturempfindlichkeit

Voltage controller with attenuated temperature sensitivity

(84) Etats contractants désignés:
**DE FR GB**

(30) Priorité: **30.08.1996 FR 9610645**

(43) Date de publication de la demande:
**18.03.1998 Bulletin 1998/12**

(73) Titulaire: **Koninklijke Philips Electronics N.V.**
**5621 BA Eindhoven (NL)**

(72) Inventeur: **Perraud, Jean-Claude**
**75008 Paris (FR)**

(74) Mandataire: **Chaffraix, Jean**
**Société Civile S.P.I.D.**
**156, Boulevard Haussmann**
**75008 Paris (FR)**

(56) Documents cités:
**DE-A- 4 300 592**    **US-A- 5 539 302**

- **CHUNG W -S ET AL: "BIPOLAR LINEAR TRANSCONDUCTOR" ELECTRONICS LETTERS, vol. 26, no. 10, 1 mai 1990, pages 619-621, XP000124177**
- **YUKIO ISHIBASHI ET AL: "A REALIZATION OF LOW SENSITIVITY RCCS-CONTROLLED MONOLITHIC INTEGRATORS AND THEIR APPLICATION TO RC ACTIVE FILTERS" IEICE TRANSACTIONS ON FUNDAMENTALS OF ELECTRONICS, COMMUNICATIONS AND COMPUTER SCIENCES, vol. E75-A, no. 12, 1 décembre 1992, pages 1777-1784, XP000339169**

Printed by Jouve, 75001 PARIS (FR)

## Description

La présente invention concerne un contrôleur de tension présentant une première et une deuxième bornes d'alimentation et une borne de sortie, muni d'un premier et d'un deuxième transistors formant une paire différentielle, leurs émetteurs étant reliés par une connexion, la base du premier transistor étant destinée à recevoir une tension dite de référence, la base du deuxième transistor étant destinée à recevoir une fraction prédéterminée d'une tension appliquée à la première borne d'alimentation, contrôleur de tension muni en outre d'un premier et d'un deuxième miroirs de courant, chacun présentant un point d'alimentation relié à la première borne d'alimentation, une branche d'entrée destinée à recevoir un courant d'entrée, et une branche de sortie destinée à délivrer un courant de sortie, chaque miroir de courant étant construit de sorte que son courant de sortie soit égal à K fois son courant d'entrée, où K est un nombre réel prédéterminé, les branches d'entrée des premier et deuxième miroirs de courant étant respectivement reliées aux collecteurs des premier et deuxième transistors, les branches de sortie des premier et deuxième miroirs de courant étant respectivement reliées aux collecteurs des deuxième et premier transistors.

Un tel contrôleur de tension est décrit dans l'ouvrage "201 Analog Designs", page 25, paragraphe 64, publié par la société Interdesign. Ce contrôleur de tension est notamment destiné à des applications de régulation de tension. Sa fonction est de comparer une tension à réguler avec une tension de référence. Afin d'éviter que des phénomènes oscillatoires ne se produisent, lorsque la tension à réguler oscille au voisinage de ladite tension de référence, par l'effet de corrections successives provoquées par le résultat de la comparaison, le contrôleur mentionné ci-dessus présente deux seuils de commutation permettant de générer un effet d'Hysteresis : lorsque la tension à réguler augmente au-delà d'un premier seuil, dit seuil haut, un signal dit de sortie est activé sur la borne de sortie et indique ce dépassement à un circuit permettant de modifier la valeur de la tension à réguler afin de provoquer une diminution de la valeur de ladite tension. Lorsque celle-ci décroît jusqu'à franchir un deuxième seuil, dit seuil bas, dont la valeur est inférieure à celle du seuil haut, le signal de sortie est désactivé, ce qui provoque une nouvelle augmentation de la tension à réguler. Si l'on note Vref la tension de référence, les seuils haut et bas obtenus au moyen de ce contrôleur sont respectivement $Vref+Vt.ln(K)$ et $Vref-Vt.ln(K)$, Vt étant égale à $K_B.T/q$, où $K_B$ est la constante de Boltzmann, T la température absolue et q la charge de l'électron. Il apparaît donc que la valeur des seuils est proportionnelle à la température, ce qui implique que la précision de la régulation dépend fortement des conditions dans lesquelles ce contrôleur est utilisé. Ces variations peuvent se faire fortement sentir dans des applications où le contrôleur est intégré dans un appareil portable, comme par exemple un téléphone cellulaire. En effet, la température à laquelle sera soumis l'appareil sera variable en fonction de l'environnement physique dans lequel évoluera l'utilisateur, entraînant ainsi des variations importantes dans la qualité du fonctionnement de l'appareil, ce qui n'est pas acceptable.

L'invention a pour but de remédier dans une large mesure à cet inconvénient en proposant un contrôleur de tension dans lequel l'amplitude des variations des valeurs des seuils de commutation en fonction des variations de la température est considérablement atténuée.

En effet, selon la présente invention, un contrôleur de tension tel que défini dans le paragraphe introductif est caractérisé en ce qu'une résistance est insérée dans la connexion entre les émetteurs des premier et deuxième transistors, lesquels émetteurs sont reliés à la deuxième borne d'alimentation via des sources de courant débitant chacune un courant dit de polarisation, en ce qu'il est muni de moyens d'injection pour injecter dans le collecteur de chacun des premier et deuxième transistors un courant égal à Q fois son propre courant de polarisation, où Q est un nombre réel prédéterminé, et en ce qu'il est muni de moyens de signalisation lui permettant de délivrer sur sa borne de sortie un courant proportionnel au courant d'entrée de l'un des premier ou deuxième miroirs de courant.

Dans un tel contrôleur de tension, le seuil haut peut être exprimé sous la forme $Vref+R.x.I+Vt.ln((1+x)/(1-x))$, le seuil bas pouvant être exprimé sous la forme $Vref-R.x.I-Vt.ln((1+x)/(1-x))$, expressions dans lesquelles I désigne la valeur du courant de polarisation, R la valeur de la résistance insérée dans la connexion entre les émetteurs des premier et deuxième transistors, et x la proportion du courant de polarisation qui passe au travers de ladite résistance aux moments où les commutations se produisent. Cette proportion est exclusivement dépendante des paramètres K et Q. Il est donc possible, par un choix judicieux desdits paramètres, de faire tendre le rapport $(1+x)/(1-x)$ vers 1, et de réduire ainsi considérablement l'influence de la température sur les valeurs des seuils haut et bas.

Un mode de réalisation de l'invention présente un contrôleur de tension tel que décrit ci-dessus, caractérisé en ce que les moyens d'injection comportent un troisième, un quatrième, un cinquième et un sixième miroirs de courant, chacun présentant un point d'alimentation, une branche d'entrée destinée à recevoir un courant d'entrée, et une branche de sortie destinée à délivrer un courant de sortie, la branche d'entrée de chacun des troisième et quatrième miroirs de courant étant destinée à recevoir respectivement le courant de polarisation du premier et du deuxième transistor, les points d'alimentation des troisième et quatrième miroirs de courant étant reliés à la deuxième borne d'alimentation, les branches d'entrée des cinquième et sixième miroirs de courant étant respectivement reliées aux branches de sortie des troisième et quatrième miroirs de courant, les branches de sortie des cinquième et sixième miroirs de courant étant respectivement reliées aux collecteurs des premier et deuxième transistors, les points d'alimentation des cinquième et sixième miroirs de courant étant reliés à la première borne d'alimentation, les troisième, quatrième, cinquième et sixième miroirs de courant étant construits de sorte que les courants de sortie des cinquième et sixième miroirs de courant soient égaux à Q fois les courants d'entrée des troisième et quatrième miroirs de courant, respectivement.

Dans un cas particulier de ce mode de réalisation, un contrôleur de tension tel que décrit ci-dessus est caractérisé en ce que les troisième et quatrième miroirs de courant sont construits de sorte que leur courant de sortie soit égal à Q fois leur courant d'entrée, et en ce que les cinquième et sixième miroirs de courant sont construits de sorte que leur courant de sortie soit égal à leur courant d'entrée.

Un mode de réalisation particulier de l'invention présente un contrôleur de tension tel que décrit plus haut, caractérisé en ce que, les premier et deuxième transistors ayant une polarité déterminée, les troisième et quatrième miroirs de courant sont constitués de transistors ayant tous la même polarité que les premier et deuxième transistors, et en ce que les premier, deuxième, cinquième et sixième miroirs de courants sont constitués par des transistors ayant tous la polarité inverse à celle des premier et deuxième transistors.

Dans un cas particulier de ce mode de réalisation, un contrôleur de tension tel que décrit ci-dessus est caractérisé en ce que les premier et deuxième transistors sont des transistors NPN.

Un mode de réalisation avantageux de l'invention présente un contrôleur de tension tel que décrit plus haut, dans lequel le premier miroir de courant est constitué d'un troisième et d'un quatrième transistors, et le deuxième miroir de courant est constitué d'un cinquième et d'un sixième transistors, les quatrième et sixième transistors étant respectivement K fois plus grands que les troisième et cinquième transistors, les bases des quatrième et sixième transistors étant respectivement reliées à la fois aux bases et aux collecteurs des troisième et cinquième transistors, les émetteurs des troisième et cinquième transistors étant respectivement reliés aux émetteurs des quatrième et sixième transistors et formant respectivement les points d'alimentation des premier et deuxième miroirs de courant, lesdits points d'alimentation étant reliés à la première borne d'alimentation, les collecteurs des troisième et cinquième transistors formant respectivement les branches d'entrée des premier et deuxième miroirs de courant, les collecteurs des quatrième et sixième transistors formant respectivement les branches de sortie des premier et deuxième miroirs de courant,

contrôleur de tension caractérisé en ce que les moyens de signalisation comportent un septième transistor, dont l'émetteur est relié à la première borne d'alimentation, dont le collecteur est relié à la borne de sortie du contrôleur de tension, et dont la base est reliée à la base de l'un des transistors constituant les premier et deuxième miroirs de courant.

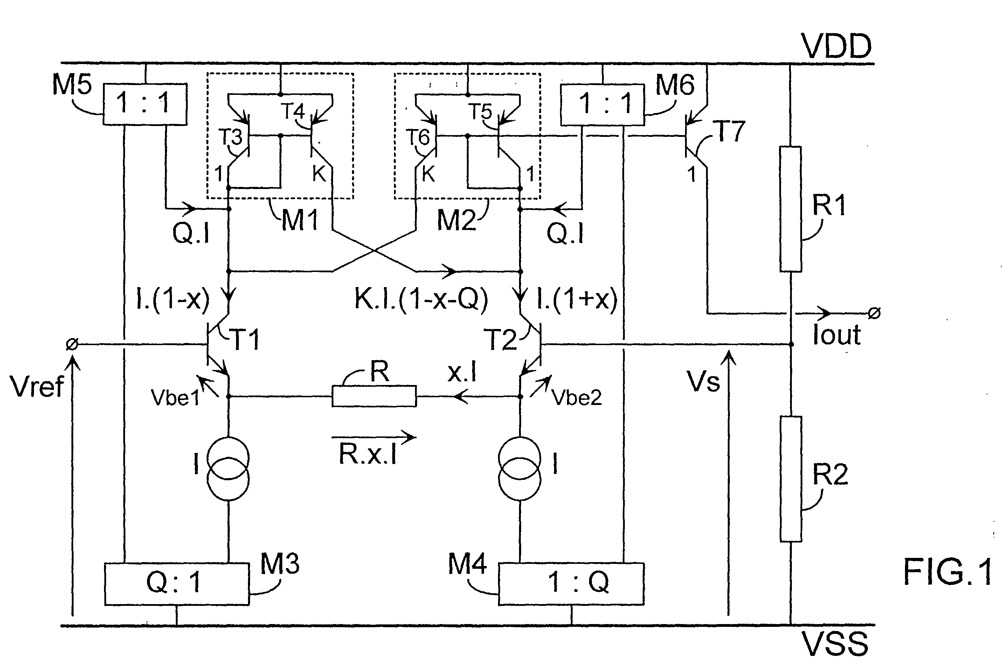

L'invention sera mieux comprise à l'aide de la description suivante d'un mode de réalisation, faite à titre d'exemple non-limitatif et en regard de la figure 1 qui représente un schéma décrivant un contrôleur de tension selon un mode de réalisation avantageux de l'invention.

Le contrôleur de tension conforme à l'invention représenté à la figure 1 présente une première et une deuxième bornes d'alimentation VDD et VSS et une borne de sortie. Il est muni d'un premier et d'un deuxième transistors T1 et T2 formant une paire différentielle, leurs émetteurs étant reliés par une connexion, la base du premier transistor étant destinée à recevoir une tension Vref dite de référence, la base du deuxième transistor étant destinée à recevoir une fraction Vs prédéterminée d'une tension appliquée à la première borne d'alimentation VDD. Cette tension Vs est prélevée au nœud intermédiaire d'un pont diviseur constitué de deux résistances R1 et R2 disposées en série entre les première et deuxième bornes d'alimentation VDD et VSS. Le contrôleur de tension est muni en outre d'un premier et d'un deuxième miroirs de courant M1 et M2, chacun présentant un point d'alimentation, une branche d'entrée destinée à recevoir un courant d'entrée, et une branche de sortie destinée à délivrer un courant de sortie. Le premier miroir de courant M1 est constitué d'un troisième et d'un quatrième transistors T3 et T4, et le deuxième miroir de courant M2 est constitué d'un cinquième et d'un sixième transistors T5 et T6. Les quatrième et sixième transistors T4 et T6 sont respectivement K fois plus grands que les troisième et cinquième transistors T3 et T5. Les bases des quatrième et sixième transistors T4 et T6 sont respectivement reliées à la fois aux bases et aux collecteurs des troisième et cinquième transistors T3 et T5. Les émetteurs des troisième et cinquième transistors T3 et T5, respectivement reliés aux émetteurs des quatrième et sixième transistors T4 et T6, forment les points d'alimentation des premier et deuxième miroirs de courant M1 et M2, lesquels points d'alimentation sont reliés à la première borne d'alimentation VDD. Les collecteurs des troisième et cinquième transistors T3 et T5 forment respectivement les branches d'entrée des premier et deuxième miroirs de courant M1 et M2, les collecteurs des quatrième et sixième transistors T4 et T6 formant respectivement les branches de sortie des premier et deuxième miroirs de courant M1 et M2. Les branches d'entrée des premier et deuxième miroirs de courant M1 et M2 sont respectivement reliées aux collecteurs des premier et deuxième transistors T1 et T2. Les branches de sortie des premier et deuxième miroirs de courant M1 et M2 sont respectivement reliées aux collecteurs des deuxième et premier transistors T2 et T1. Une résistance R est insérée dans la connexion entre les émetteurs des premier et deuxième transistors T1 et T2, lesquels émetteurs sont reliés à la deuxième borne d'alimentation VSS via des sources de courant débitant chacune un courant I dit de polarisation. Le contrôleur de tension comporte un troisième, un quatrième, un cinquième et un sixième miroirs de courant, respectivement M3, M4, M5, M6, chacun présentant un point d'alimentation, une branche d'entrée destinée à recevoir un courant d'entrée, et une branche de sortie destinée à délivrer un courant de sortie. La branche d'entrée de chacun des troisième et quatrième miroirs de courant M3 et M4 est destinée à recevoir respectivement le courant de polarisation I du premier et du deuxième transistor T1 et T2. Les points d'alimentation des troisième et quatrième miroirs de courant M3 et M4 sont reliés à la deuxième borne d'alimentation VSS. Les branches d'entrée des cinquième et sixième miroirs de courant M5 et M6 sont respectivement reliées aux branches de sortie des troisième et quatrième miroirs de courant M3 et M4. Les branches de sortie des cinquième et sixième miroirs de courant M5 et M6 sont respectivement reliées aux collecteurs des premier et deuxième transistors T1 et T2. Les points d'alimentation des cinquième et sixième miroirs de courant M5 et M6 sont reliés à la première borne d'alimentation VDD. Les troisième et quatrième miroirs de courant M3 et M4 sont construits de sorte que leur courant de sortie soit égal à Q fois leur courant d'entrée. Les cinquième et sixième miroirs de courant M5 et M6 sont construits de sorte que leur courant de sortie soit égal à leur courant d'entrée. Les premier et deuxième transistors sont de polarité NPN, les troisième et quatrième miroirs de courant M3 et M4 sont constitués par des transistors de polarité NPN, et les premier, deuxième, cinquième et sixième miroirs de courants, respectivement M1, M2, M5, M6, sont constitués par des transistors de polarité PNP. Le contrôleur de tension comporte enfin un septième transistor T7, de polarité PNP, dont l'émetteur est relié à la première borne d'alimentation VDD, dont le collecteur est relié à la borne de sortie du contrôleur de tension, et dont la base est reliée aux bases des cinquième et sixième transistors T5 et T6 qui constituent le deuxième miroir de courant M2.

Le fonctionnement d'un tel contrôleur de tension peut être décrit de la manière suivante : lorsque la tension de référence Vref est très supérieure à Vs, le premier transistor T1 conduit et le deuxième transistor T2 est bloqué. Le courant passant au travers du premier transistor T1 vaut donc deux fois le courant de polarisation, soit 2.I, et la résistance est parcourue par un courant I dans le sens opposé à celui représenté sur la figure 1. La branche de sortie du premier miroir de courant M1 est donc potentiellement capable de fournir un fort courant valant 2.K.I.(1-Q) au collecteur du deuxième transistor T2 et donc de court-circuiter le deuxième miroir de courant M2. Le courant de sortie Iout du septième transistor T7, reflet du courant parcourant le cinquième transistor T5, est donc nul. Au fur et à mesure que la tension Vs augmente, la paire différentielle (T1, T2) approche de l'équilibre et la valeur du courant parcourant le premier transistor T1 diminue, tandis que la valeur du courant parcourant le deuxième transistor T2 augmente. Lorsque Vs devient suffisamment grand devant la tension de référence Vref, le deuxième transistor T2 conduit plus que le premier transistor T1 et le courant parcourant la résistance R change de sens pour adopter celui indiqué sur la figure 1. Le cinquième transistor T5 du deuxième miroir de courant M2 commence à conduire lorsque le courant de collecteur du deuxième transistor T2 devient supérieur au courant de sortie du premier miroir de courant M1, auquel s'ajoute le courant injecté dans ledit collecteur au moyen du sixième miroir de courant M6. Ceci constitue la condition de mise en conduction du septième transistor T7, qui signale que la tension appliquée à la première borne d'alimentation VDD a dépassé le seuil haut du contrôleur de tension. Cette condition peut s'écrire Q.I+K.I.(1-x-Q)=I.(1+x), ou encore :

$$x=((K-1).(1-Q))/(1+K) \qquad \text{(relation 1)}$$

Au moment de la commutation, on a par ailleurs : Vs=Vref+R.x.I+Vbe2-Vbe1, ou Vbe2 et Vbe1 sont respectivement les tensions base-émetteur des premier et deuxième transistors T1 et T2. On sait de plus que Vbe2-Vbe1=Vt.ln(I(T2)/I(T1)), si I(T1) et I(T2) désignent respectivement les courants parcourant les premier et deuxième transistors T1 et T2, égaux dans ce cas de figure à I.(1-x) et I.(1+x), respectivement. Le seuil S1 que doit atteindre Vs pour provoquer la mise en conduction du septième transistor T7 s'écrit alors :

$$S1=Vref+R.x.I+Vt.ln((1+x)/(1-x))$$

Un raisonnement identique conduit à l'expression du seuil S2 que doit atteindre Vs pour provoquer l'arrêt de la conduction du septième transistor T7 :

$$S1=Vref-R.x.I-Vt.ln((1+x)/(1-x))$$

Les seuils ainsi obtenus comportent donc une composante Vref±R.x.I indépendante de la température, et une composante Vt.ln((1+x)/(1-x)) dépendante de la température, dont on peut minimiser l'influence grâce à un choix judicieux des paramètres K et Q. Ce choix représente un compromis entre la précision maximale de régulation souhaitée et une complexité minimale du contrôleur de tension, se traduisant par une surface minimale de silicium pour réaliser ledit contrôleur. Si, par exemple, on choisit K=2 et Q=2/3, la relation 1 donne x=1/9. Le seuil S1 s'écrit donc S1=Vref+R.x.I.Vt.ln (10/8). Si, de plus, R1 et R2 ont les mêmes valeurs nominales, VDD=2.Vs, et le courant Iout sera donc nul jusqu'à ce que VDD dépasse 2.(Vref+R.x.I+Vt.ln(10/8)). La valeur de Vt.ln(10/8) est peu différente de 5,8mV. Avec une tension de référence égale à 1.2V, valeur courante pour une tension issue d'un générateur de tension de type bandgap, et un dimensionnement de la résistance R et des sources de courant débitant chacune un courant de polarisation I de sorte que (R.I)/9 soit égal à 30,2mV, le seuil haut VI que doit atteindre VDD pour provoquer la mise en conduction du septième transistor T7 vaut donc 2,4V+72mV, le seuil bas V2 que doit atteindre VDD pour provoquer l'arrêt de la conduction du septième transistor T7 valant 2,4V-72mV, ce qui représente une hystérésis de 144mV. De plus, au sein de cette hystérésis, la composante dépendante de la température est de l'ordre de 24mV, alors que la composante indépendante de la température est de l'ordre de 120mV.

Une comparaison avec le contrôleur de tension connu explicite clairement les avantages de l'invention. En effet, le contrôleur de tension connu ne permet d'obtenir qu'une hystérésis de 72mV avec un facteur K égal à 4. De plus, cette hystérésis est alors entièrement dépendant de la température. L'amplitude de variation des seuils de commutation en fonction de la température est donc environ cinq fois plus importante dans le contrôleur connu que dans le contrôleur de tension selon le mode de réalisation de l'invention décrit ci-dessus.

**Revendications**

1. Contrôleur de tension présentant une première et une deuxième bornes d'alimentation et une borne de sortie, muni d'un premier et d'un deuxième transistors formant une paire différentielle, leurs émetteurs étant reliés par une connexion, la base du premier transistor étant destinée à recevoir une tension dite de référence, la base du deuxième transistor étant destinée à recevoir une fraction prédéterminée d'une tension appliquée à la première borne d'alimentation, contrôleur de tension muni en outre d'un premier et d'un deuxième miroirs de courant, chacun présentant un point d'alimentation relié à la première borne d'alimentation, une branche d'entrée destinée à recevoir un courant d'entrée, et une branche de sortie destinée à délivrer un courant de sortie, chaque miroir de courant étant construit de sorte que son courant de sortie soit égal à K fois son courant d'entrée, où K est un nombre réel prédéterminé, les branches d'entrée des premier et deuxième miroirs de courant étant respectivement reliées aux collecteurs des premier et deuxième transistors, les branches de sortie des premier et deuxième miroirs de courant étant respectivement reliées aux collecteurs des deuxième et premier transistors,
contrôleur de tension **caractérisé en ce qu'**une résistance est insérée dans la connexion entre les émetteurs des premier et deuxième transistors, lesquels émetteurs sont reliés à la deuxième borne d'alimentation via des sources de courant débitant chacune un courant dit de polarisation, **en ce qu'**il est muni de moyens d'injection pour injecter dans le collecteur de chacun des premier et deuxième transistors un courant égal à Q fois son propre courant de polarisation, où Q est un nombre réel prédéterminé, et **en ce qu'**il est muni de moyens de signalisation lui permettant de délivrer sur sa borne de sortie un courant proportionnel au courant d'entrée de l'un des premier ou deuxième miroirs de courant.

2. Contrôleur de tension selon la revendication 1, **caractérisé en ce que** les moyens d'injection comportent un troisième, un quatrième, un cinquième et un sixième miroirs de courant, chacun présentant un point d'alimentation, une branche d'entrée destinée à recevoir un courant d'entrée, et une branche de sortie destinée à délivrer un courant de sortie, la branche d'entrée de chacun des troisième et quatrième miroirs de courant étant destinée à recevoir respectivement le courant de polarisation du premier et du deuxième transistor, les points d'alimentation des troisième et quatrième miroirs de courant étant reliés à la deuxième borne d'alimentation, les branches d'entrée des cinquième et sixième miroirs de courant étant respectivement reliées aux branches de sortie des troisième et quatrième miroirs de courant, les branches de sortie des cinquième et sixième miroirs de courant étant respectivement reliées aux collecteurs des premier et deuxième transistors, les points d'alimentation des cinquième et sixième miroirs de courant étant reliés à la première borne d'alimentation, les troisième, quatrième, cinquième et sixième miroirs de courant étant construits de sorte que les courants de sortie des cinquième et sixième miroirs de courant soient égaux à Q fois les courants d'entrée des troisième et quatrième miroirs de courant, respectivement.

3. Contrôleur de tension selon la revendication 2, **caractérisé en ce que** les troisième et quatrième miroirs de courant sont construits de sorte que leur courant de sortie soit égal à Q fois leur courant d'entrée, et **en ce que** les cinquième et sixième miroirs de courant sont construits de sorte que leur courant de sortie soit égal à leur courant d'entrée.

4. Contrôleur de tension selon l'une des revendications 2 et 3, **caractérisé en ce que**, les premier et deuxième transistors ayant une polarité déterminée, les troisième et quatrième miroirs de courant sont constitués de transistors ayant tous la même polarité que les premier et deuxième transistors, et **en ce que** les premier, deuxième, cinquième et sixième miroirs de courants sont constitués par des transistors ayant tous la polarité inverse à celle des premier et deuxième transistors.

5. Contrôleur de tension selon la revendication 4, **caractérisé en ce que** les premier et deuxième transistors sont des transistors NPN.

6. Contrôleur de tension selon l'une quelconque des revendications 1 à 5, dans lequel le premier miroir de courant est constitué d'un troisième et d'un quatrième transistors, et le deuxième miroir de courant est constitué d'un cinquième et d'un sixième transistors, les quatrième et sixième transistors étant respectivement K fois plus grands que les troisième et cinquième transistors, les bases des quatrième et sixième transistors étant respectivement reliées à la fois aux bases et aux collecteurs des troisième et cinquième transistors, les émetteurs des troisième et cinquième transistors étant respectivement reliés aux émetteurs des quatrième et sixième transistors et formant respectivement les points d'alimentation des premier et deuxième miroirs de courant, lesdits points d'alimentation étant reliés à la première borne d'alimentation, les collecteurs des troisième et cinquième transistors formant respectivement les branches d'entrée des premier et deuxième miroirs de courant, les collecteurs des quatrième et sixième transistors formant respectivement les branches de sortie des premier et deuxième miroirs de courant,

contrôleur de tension **caractérisé en ce que** les moyens de signalisation comportent un septième transistor, dont l'émetteur est relié à la première borne d'alimentation, dont le collecteur est relié à la borne de sortie du contrôleur de tension, et dont la base est reliée à la base de l'un des transistors constituant les premier et deuxième miroirs de courant.

**Patentansprüche**

1. Spannungssteuerung mit einer ersten und einer zweiten Versorgungsklemme und einer Ausgangsklemme, versehen mit einem ersten und einem zweiten Transistor zur Bildung eines Differentialpaars, mit einer Verbindung zwischen ihren Emittern, wobei die Basis des ersten Transistors dazu dient, eine sogenannte Referenzspannung zu erhalten, die Basis des zweiten Transistors dazu dient, einen vorbestimmten Bruchteil einer der ersten Versorgungsklemme zugeführten Spannung zu erhalten, die Spannungssteuerung zudem mit einem ersten und einem zweiten Stromspiegel versehen ist, die beide eine mit der ersten Versorgungsklemme verbundene Versorgungsbrücke aufweisen, ein Eingangszweig dazu dient, einen Eingangsstrom zu erhalten und ein Ausgangszweig dazu dient, einen Ausgangsstrom abzugeben, wobei jeder Stromspiegel so gebaut ist, damit sein Ausgangsstrom gleich K-mal seines Eingangsstroms ist, wobei K eine vorbestimmte reelle Zahl ist, die Eingangszweige des ersten und zweiten Stromspiegels respektive mit den Kollektoren des ersten und zweiten Transistors verbunden sind und die Ausgangszweige des ersten und zweiten Stromspiegels respektive mit den Kollektoren des zweiten und ersten Transistors verbunden sind,

eine **dadurch gekennzeichnete** Spannungssteuerung, daß ein Widerstand in die Verbindung zwischen den Emittern des ersten und zweiten Transistors eingefügt ist, diese Emitter mit der zweiten Versorgungsklemme über Stromquellen verbunden sind, die jeweils einen sogenannten Polarisierungsstrom abgeben, daß sie mit Injektionsmitteln versehen ist, um in den jeweiligen Kollektor des ersten und zweiten Transistors einen Strom gleich Q-mal ihres eigenen Polarisierungsstroms zu injizieren, wobei Q eine vorbestimmte reelle Zahl ist, und dadurch, daß sie mit Signalmitteln versehen ist, die es ihr ermöglichen, an ihrer Ausgangsklemme einen zum Eingangsstrom des ersten oder zweiten Stromspiegels proportionalen Strom abzugeben.

2. Spannungssteuerung nach Anspruch 1, **dadurch gekennzeichnet, daß** die Injektionsmittel einen dritten, einen vierten, einen fünften und einen sechsten Stromspiegel aufweisen, die jeweils einen Versorgungspunkt, einen Eingangszweig für den Erhalt eines Eingangsstroms und einen Ausgangszweig für die Abgabe eines Ausgangsstroms aufweisen, wobei der jeweilige Eingangszweig des dritten und vierten Stromspiegels vorgesehen ist, um respektive den Polarisierungsstrom des ersten und zweiten Transistors zu erhalten, die Versorgungspunkte des dritten und vierten Stromspiegels mit der zweiten Versorgungsklemme verbunden sind, die Eingangszweige des fünften und sechsten Stromspiegels respektive mit den Ausgangszweigen des dritten und vierten Stromspiegels verbunden sind, die Ausgangszweige des fünften und sechsten Stromspiegels respektive mit den Kollektoren des ersten und zweiten Transistors verbunden sind, die Versorgungspunkte des fünften und sechsten Stromspiegels mit der ersten Versorgungsklemme verbunden sind, und der dritte, vierte, fünfte und sechste Stromspiegel so gebaut sind, damit die Ausgangsströme des fünften und sechsten Stromspiegels gleich Q-mal der Eingangsströme des dritten und vierten Stromspiegels, respektive, sind.

3. Spannungssteuerung nach Anspruch 2, **dadurch gekennzeichnet, daß** der dritte und vierte Stromspiegel so gebaut sind, damit ihr Ausgangsstrom gleich Q-mal ihres Eingangsstroms ist, und daß der fünfte und sechste Stromspiegel so gebaut sind, damit ihr Ausgangsstrom gleich ihrem Eingangsstrom ist.

**4.** Spannungssteuerung nach einem der Ansprüche 2 oder 3, **dadurch gekennzeichnet, daß** der erste und zweite Transistor eine bestimmte Polarität haben, der dritte und vierte Stromspiegel aus Transistoren mit jeweils derselben Polarität wie der erste und zweite Transistor gebildet werden, und daß der erste, zweite, fünfte und sechste Stromspiegel aus Transistoren gebildet wird, die jeweils eine zum ersten und zweiten Transistor umgekehrte Polarität aufweisen.

**5.** Spannungssteuerung nach Anspruch 4, **dadurch gekennzeichnet, daß** der erste und zweite Transistor NPN-Transistoren sind.

**6.** Spannungssteuerung nach einem beliebigen der Ansprüche 1 bis 5, in der der erste Stromspiegel aus einem dritten und einem vierten Transistor gebildet wird, und der zweite Stromspiegel aus einem fünften und einem sechsten Transistor gebildet wird, wobei der vierte und sechste Transistor respektive K-mal größer als der dritte und fünfte Transistor sind, die Basen des vierten und sechsten Transistors respektive zugleich mit den Basen und den Kollektoren des dritten und fünften Transistors verbunden sind, die Emitter des dritten und fünften Transistors respektive mit den Emittern des vierten und sechsten Transistors verbunden sind und respektive die Versorgungspunkte des ersten und zweiten Stromspiegels bilden, die Versorgungspunkte mit der ersten Versorgungsklemme verbunden sind, die Kollektoren des dritten und fünften Transistors respektive die Eingangszweige des ersten und zweiten Stromspiegels bilden und die Kollektoren des vierten und sechsten Transistors respektive die Ausgangszweige des ersten und zweiten Stromspiegels bilden,
dadurch **gekennzeichnete** Spannungssteuerung, daß die Signalmittel einen siebten Transistor aufweisen, dessen Emitter mit der ersten Versorgungsklemme verbunden ist, dessen Kollektor mit der Ausgangsklemme der Spannungssteuerung verbunden ist und dessen Basis mit der Basis eines der den ersten und zweiten Stromspiegel bildenden Transistoren verbunden ist.

**Claims**

**1.** A voltage control means having a first and a second power supply terminal and an output terminal, provided with a first and a second transistor constituting a differential pair, whose emitters are connected by means of a connection, the base of the first transistor being intended to receive a reference voltage, the base of the second transistor being intended to receive a predetermined fraction of a voltage applied to the first power supply terminal, said voltage control means being also provided with a first and a second current mirror each having a power supply point connected to the first power supply terminal, an input branch intended to receive an input current and an output branch intended to supply an output current, each current mirror being constructed in such a way that its output current is equal to K times its input current, in which K is a predetermined real number, the input branches of the first and second current mirrors being connected to the collectors of the first and second transistors, respectively, the output branches of the first and second current mirrors being connected to the collectors of the second and first transistors, respectively,
**characterized in that** a resistor is inserted in the connection between the emitters of the first and second transistors, which emitters are connected to the second power supply terminal via current sources each supplying a bias current, **in that** it is provided with injection means for injecting into the collector of each first and second transistor a current equal to Q times its own bias current, in which Q is a predetermined real number, and **in that** it is provided with signalization means allowing supply of a current at its output terminal, which current is proportional to the input current of one of the first or second current mirrors.

**2.** A voltage control means as claimed in claim 1, **characterized in that** the injection means comprise a third, a fourth, a fifth and a sixth current mirror, each having a power supply point, an input branch intended to receive an input current, and an output branch intended to supply an output current, the input branch of each third and fourth current mirror being intended to receive the bias current of the first and the second transistor, respectively, the power supply points of the third and fourth current mirrors being connected to the second power supply terminal, the input branches of the fifth and sixth current mirrors being connected to the output branches of the third and fourth current mirrors, respectively, the output branches of the fifth and sixth current mirrors being connected to the collectors of the first and second transistors, respectively, the power supply points of the fifth and sixth current mirrors being connected to the first power supply terminal, the third, fourth, fifth and sixth current mirrors being constructed in such a way that the output currents of the fifth and sixth current mirrors are equal to Q times the input currents of the third and fourth current mirrors, respectively.

**3.** A voltage control means as claimed in claim 2, **characterized in that** the third and fourth current mirrors are constructed in such a way that their output current is equal to Q times their input current, and **in that** the fifth and sixth current mirrors are constructed in such a way that their output current is equal to their input current.

4. A voltage control means as claimed in any one of claims 2 and 3, **characterized in that**, the first and second transistors having a given polarity, the third and fourth current mirrors are constituted by transistors all having the same polarity as the first and second transistors, and **in that** the first, second, fifth and sixth current mirrors are constituted by transistors all having a polarity which is inverse to that of the first and second transistors.

5. A voltage control means as claimed in claim 4, **characterized in that** the first and second transistors are NPN transistors.

6. A voltage control means as claimed in any one of claims 1 to 5, in which the first current mirror is constituted by a third and a fourth transistor and the second current mirror is constituted by a fifth and a sixth transistor, the fourth and sixth transistors being K times larger than the third and fifth transistors, respectively, the bases of the fourth and sixth transistors being connected to the bases and collectors of the third and fifth transistors, respectively, the emitters of the third and fifth transistors being connected to the emitters of the fourth and sixth transistors, respectively, and constituting the power supply points of the first and second current mirrors, respectively, said power supply points being connected to the first power supply terminal, the collectors of the third and fifth transistors constituting the input branches of the first and second current mirrors, respectively, the collectors of the fourth and sixth transistors constituting the output branches of the first and second current mirrors, respectively,

   **characterized in that** the signalization means comprise a seventh transistor whose emitter is connected to the first power supply terminal, whose collector is connected to the output terminal of the voltage control means and whose base is connected to the base of one of the transistors constituting the first and second current mirrors.

VDD

M5 | 1 : 1

T4

T3

1 | K

M1

Q.I

I.(1-x)

Vref

Vbe1

I

M3 | Q : 1

T6 | T5

K | 1

M2

Q.I

K.I.(1-x-Q)

I.(1+x)

T2

R | x.I

Vbe2

R.x.I

I

M4 | 1 : Q

T1

1 : 1 | M6

T7

1

R1

Iout

Vs

R2

VSS

FIG.1